## Europäisches Patentamt

## European Patent Office

## Office européen des brevets

(11) Veröffentlichungsnummer: **0 123 959**
**B1**

(12) # EUROPÄISCHE PATENTSCHRIFT

(45) Veröffentlichungstag der Patentschrift:
01.07.87

(51) Int. Cl.⁴: **H 04 N 5/91,** H 04 N 7/04

(21) Anmeldenummer: **84103762.5**

(22) Anmeldetag: **05.04.84**

(54) **Videorecorder mit Aufzeichnung eines Videotext-Signals.**

(30) Priorität: 30.04.83 DE 3315740

(43) Veröffentlichungstag der Anmeldung:
07.11.84 Patentblatt 84/45

(45) Bekanntmachung des Hinweises auf die Patenterteilung:
01.07.87 Patentblatt 87/27

(84) Benannte Vertragsstaaten:
AT BE CH DE FR GB IT LI LU NL SE

(56) Entgegenhaltungen:
GB-A-2 003 697

FUNKSCHAU, Band 49, Hefte 18 und 19, 1977 D.
EATON et al. "Die Grundlagen von Teletext und
Viewdata", 1. und 2. Teil, Seiten 820-824, 882-887

(73) Patentinhaber: **TELEFUNKEN Fernseh und
Rundfunk GmbH, Göttinger Chaussee 76, D-3000
Hannover 91 (DE)**

(72) Erfinder: **Kluth, Hans- Jürgen, Weichselstrasse 11,
D-7730 VS- Villingen (DE)**

(74) Vertreter: **Einsel, Robert, Dipl.- Ing., TELEFUNKEN
Fernseh und Rundfunk GmbH Göttinger
Chaussee 76, D-3000 Hannover 91 (DE)**

## Beschreibung

Bei Videorecordern nach den Systemen VHS, Betamax und V 2000 wird das Leuchtdichtesignal Y durch Frequenzmodulation eines Bildträgers jeweils von Halbbild zu Halbbild auf Schrägspuren eines Magnetbandes aufgezeichnet. Beim Fernseh-Rundfunk ist es bekannt, zusätzlich zu dem eigentlichen Fernsehbild während zwei Zeilen der Vertikal-Austastlücke ein Videotext-Signal in digitaler Form zu übertragen. Dieses Signal wird im Fernsehempfänger einem Schriftzeichengenerator zugeführt, der aus dem nur kurzzeitig übertragenen Videotext-Signal breitbandige R,G,G-Signale erzeugt. Diese Signale werden zusätzlich zu dem FBAS-Signal den Bildröhrenelektroden zugeführt. Auf diese Weise ist es möglich, anstelle des eigentlichen Fernsehbildes oder auch zusätzlich zu diesem Schriftzeichen auf dem Bildschirm abzubilden. Das Videotext-Signal kann auch im Zusammenhang mit dem eigentlichen Bildsignal stehen, wenn z. B. bei einem Fußballspiel der Kommentar für Schwerhörige zusätzlich als Videotext-Signal übertragen wird. Bei der Aufzeichnung eines derartigen Signals mit einem Videorecorder besteht daher der Wunsch, außer dem eigentlichen Fernsehbild auch das Videotext-Signal oder auch nur ein Videotext-Signal aufzuzeichnen.

Die Aufzeichnung des Videotext-Signals mit handelsüblichen Videorecordern ist jedoch nicht ohne weiteres möglich. Das digitale Videotext-Signal benötigt eine Bandbreite von etwa 3,5-4 MHz, während die Aufzeichnungsbreite handelsüblicher Videorecorder nur etwa 3,0 MHz beträgt. Wenn das Videotext-Signal mit einer Bandbreite von nur 3,0 MHz aufgezeichnet wird, kann es bei der Wiedergabe in dem Videotext-Decoder nicht mehr einwandfrei zur Erzeugung der Schriftzeichen-Signale decodiert werden.

Der Erfindung liegt die Aufgabe zugrunde, eine zusätzliche Aufzeichnung des Videotext-Signals mit handelsüblichen Videorecordern zu ermöglichen, ohne daß im Videorecorder nennenswerte Änderungen erforderlich sind.

Die Aufgabe wird durch die im Anspruch 1 beschriebene Erfindung gelöst. Vorteilhafte Weiterbildungen der Erfindung sind in den Unteransprüchen beschrieben.

In der Zeitschrift "Funkschau", 1977, Seiten 820 - 824 und 882 - 887 sind der Aufbau und die Verarbeitung eines Videotext-Signals im Fernsehempfänger beschrieben. Dort werden für die Umsetzung des empfangenen digitalen Videotext-Signals in ein Schriftzeichen darstellendes analoges Videosignal Speicher verwendet. Die dort verwendeten RAM-Speicher dienen zur Speicherung der jeweils nur kurzzeitig gesendeten Videotext-Signale und ein ROM-Speicher als sogenannter Zeichenspeicher, der jeweils die die Schriftzeichen darstellenden analogen Videosignale zur Steuerung der Bildröhre liefert. Die Aufgabe, ein digitales Videotext-Signal mit einem analog arbeitenden Videorecorder mit begrenzter Aufzeichnungsbreite aufzuzeichnen, wird dort nicht behandelt.

Die Erfindung beruht auf folgender Erkenntnis. Eine Aufzeichnung des Videotext-Signals durch Frequenzmodulation des Bildträgers, also die das Leuchtdichtesignal selbst, ist wegen der begrenzten Aufzeichnungsbandbreite nicht möglich. Der auf dem Videoband aufgezeichnete, mit dem Leuchtdichtesignal Y frequenzmodulierten Bildträger nimmt indessen auf dem Videoband eine Bandbreite von etwa 6 MHz ein. Diese Bandbreite ist ausreichend das digitale Videotext-Signal unmittelbar, also ohne Modulation auf einen Träger aufzuzeichnen. Dies ist insbesondere deshalb möglich, weil das Videotext-Signal ähnlich wie der mit dem Leuchtdichtesignal frequenzmodulierte Bildträger ein FM-Signal konstanter Amplitude ist und daher ohne Schwierigkeiten ähnlich wie der modulierte Bildträger selbst aufgezeichnet werden kann.

Die Lösung erfordert im Videorecorder praktisch keinen zusätzlichen Aufwand. Es ist lediglich notwendig, während der Videotext-Zeilen den Videoköpfen nicht den modulierten Bildträger, sonderen direkt das digitale Videotext-Signal zuzuführen und gegebenenfalls den FM-Modulator für das Leuchtdichtesignal zur Vermeidung von Störungen abzuschalten. Bei der Wiedergabe wird entsprechend verfahren. Dann wird das vom Videoband abgetastete Signal während der Videotext-Zeilen nicht dem FM-Demodulator, sondern dem Videotext-Decoder zugeführt.

Videorecorder bewirken im allgemeinen durch Schwankungen der Relativgeschwindigkeit zwischen den Videoköpfen und dem Magnetband Zeitfehler im abgetasteten Signal. Derartige Zeitfehler in dem digitalen Videotext-Signal und den zugeordneten Zeilensynchronimpulsen können die Decodierung des Videotext-Signals stören. Deshalb wird vorzugsweise bei der Wiedergabe im Weg des Videotext-Signals vor dem Videotext-Decoder eine bekannte Schaltung zum Ausgleich von Zeitfehlern vorgesehen. Derartige Schaltungen enthalten im allgemeinen eine Laufzeitleitung oder einen elektronisch getakteten Speicher, dessen Laufzeit in Abhängigkeit von den Zeitfehlern gesteuert wird und die Zeitfehler beseitigt.

Ein Ausführungsbeispiel der Erfindung wird im folgenden an Hand der Zeichnung erläutert. Darin zeigen

Fig. 1 ein Blockschaltbild für die Aufnahme und

Fig. 2 Kurven zur Erläuterung der Wirkungsweise der Schaltung nach Fig. 1.

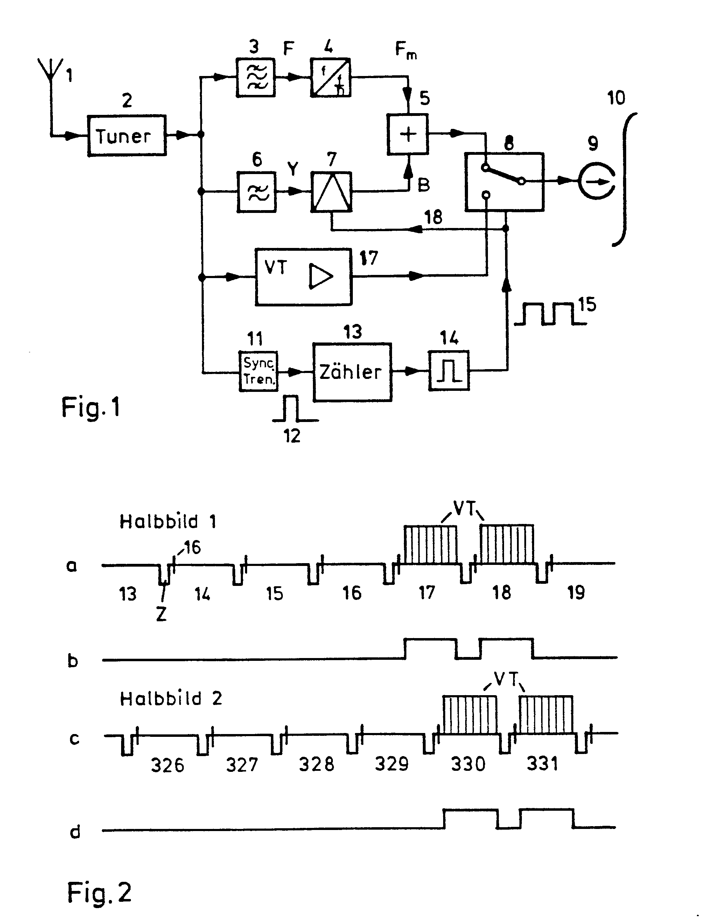

In Fig. 1 wird ein Fernseh-Rundfunksignal, das auch ein Videotext-Signal enthält, von der Antenne 1 dem Tuner 2 zugeführt, der an seinem Ausgang das FBAS-Signal einschließlich Videotext-Signal liefert. Der modulierte Farbträger F wird mit dem Bandpaß 3 mit einer Durchlaßfrequenz von 4,43 MHz ± 0,5 MHz ausgewertet und in dem Frequenzumsetzer 4 mit dem Teilerfaktor n auf eine Frequenz von etwa 0,63 MHz umgesetzt. Der so in der Frequenz herabgesetzte, modifizierte Farbträger Fm gelangt auf die Addierstufe 5. Das Leuchtdichtesignal Y wird über den Tiefpaß 6 mit einer Grenzfrequenz von 3 MHz dem FM-Modulator 7 zugeführt. Dieser erzeugt den mit dem Leuchtdichtesignal Y frequenzmodulierten Bildträger B, der ebenfalls der Addierstufe 5 zugeführt wird. Das Ausgangssignal der Addierstufe 5, enthaltend den modulierten Bildträger B und den Farbträger Fm, gelangt über den Schalter 8 auf die Videoköpfe 9 und wird auf Schrägspuren des Magnetbandes 10 aufgezeichnet. Bei dieser Schaltung würde auch das während der Videotext-Zeilen empfangene Videotext-Signal aufgezeichnet. Die Aufzeichnungsbandbreite wäre jedoch zu klein, so daß das Videotext-Signal bei der Wiedergabe in dem Videotext-Decoder keine einwandfreie Decodierung mehr ermöglicht.

Anhand der Fig. 2 wird die Aufzeichnung des Videotext-Signals erläutert. Das Videotext-Signal VT wird jeweils während der Zeilen 17 und 18 im Halbbild 1, also in allen ungeradzahligen Halbbildern, und während der Zeilen 330 und 331 während des Halbbildes 2, also während aller geradzahligen Halbbilder übertragen. Mit der Synchronsignal-Trennstufe 11 wird aus dem Leuchtdichtesignal Y ein jeweils den Beginn eines vollständigen Bildes markierender Impuls 12 gewonnen, der dem Zähler 13 zugeführt wird. Der Zähler 13 zählt jeweils bis zu den Zeilen 17, 18, 330, 331 und erzeugt über den Impulsformer 14 Impulse 15. Während der ungeradzahligen Halbbilder dauern die Impulse 15 gemäß Fig. 2b jeweils während der Zeilen 17, 18 etwa vom Ende der hinteren Schwarzschulter bis zum Beginn der vorderen Schwarzschulter. Sie liegen also während der Zeilenhinlaufzeit und erfassen zeitlich nicht die Zeilensynchronimpulse Z und die Farbsynchronsignale 16, damit die Aufzeichnung dieser Signale mit dem Bildträger B nicht unterbrochen wird. Während der geradzahligen Halbbilder liegen die Impulse 15 gemäß Fig. 2d entsprechend während der Zeilen 330 und 331.

Die Impulse 15 betätigen jeweils den Schalter 8 und schalten den Eingang der Videoköpfe 9 auf den Ausgang der Videotext-Schaltung 17 um. In dieser Schaltung werden die Videotext-Signale aufbereitet und insbesondere auf die für die Aufzeichnung notwendige Amplitude verstärkt. Jeweils während der Dauer der Impulse 15, also während der Hinlaufzeiten der Zeilen 17, 18, 330, 331 wird also nicht der modulierte Bildträger B, sondern unmittelbar das Videotext-Signal VT mit den Videoköpfen 9 auf dem Magnetband 10 aufgezeichnet. Die Impulse 15 schalten außerdem über die Leitung 18 den FM-Modulator 7 ab, z. B. durch Abschaltung der Betriebsspannung, um Störungen durch dessen Ausgangssignal zu vermeiden. Die Impulse 15 können ebenso die Addierstufe 5 abschalten, damit diese kein Ausgangssignal an den Umschalter 8 liefert.

Bei der Wiedergabe arbeitet die Schaltung entsprechend, indem das abgetastete Signal durch entsprechend erzeugte Impulse 15 während der genannten Zeilen nicht einem FM-Demodulator, sondern einem Videotext-Decoder zugeführt wird. Dabei liegt vorzugsweise im Weg des Videotext-Signals noch eine Schaltung zum Ausgleich von Zeitfehlern. Derartige Schaltung sind z. B. beschrieben in der DE-OS 21 22 592 und der DE-OS 21 29 760.

**Patentansprüche**

1. Viderecorder mit Aufzeichnung eines Videotext-Signals (VT), bei dem das Leuchtdichtesignal (Y) durch Frequenzmodulation eines Bildträgers (B) aufgezeichnet wird, dadurch gekennzeichnet, daß das empfangene, in einem vom Weg (6, 7, 5) des Leuchtdichtesignals (Y) getrennten Weg (17) aufbereitete digitale Videotext-Signal (VT) ohne Modulation auf einen Träger anstelle des Bildträgers (B) aufgezeichnet wird.

2. Recorder nach Anspruch 1, dadurch gekennzeichnet, daß die Aufzeichnung während der Videotext-Zeilen (Nr. 17, 18, 330, 331) jeweils nur während der Zeilenhinlaufzeit erfolgt.

3. Recorder nach Anspruch 1, dadurch gekennzcichnet, daß während der Aufzeichnung des Videotext-Signals (VT) der FM-Modulator (7) für das Leuchtdichtesignal (Y) abgeschaltet ist.

4. Recorder nach Anspruch 1, dadurch gekennzeichnet, daß bei der Wiedergabe im Weg des Videotext-Signals (VT) eine Schaltung zum Ausgleich von Zeitfehlern liegt.

**Claims**

1. Videorecorder providing the recording of a video text signal (VT), in which the light intensity signal (Y) is recorded by frequency modulation of a picture carrier, characterized in that the received digital video text signal (VT), processed in a path (17) separated from the path (6, 7, 5) of the light intensity signal, is recorded in place of the picture carrier (B) without modulation on a carrier.

2. Recorder according to Claim 7, characterized in that during the video text lines (No. 17, 18, 330, 331) the recording occurs in each case only during the line forward time.

3. Recorder according to Claim 1, characterized in that during the recording of the video text signal (VT) the FM modulator (7) for the light intensity signal (Y) is switched off.

4. Recorder according to Claim 1, characterized in that a circuit for the equalisation of time errors is located in the path for the video text signal (VT) during the reproduction.

**Revendications**

1. Magnétoscope avec enregistrement d'un signal vidéotexte (VT) dans lequel le signal de luminance (Y) est enregistré par modulation de fréquence d'une porteuse-image (B), caractérisé en ce que le signal numérique de vidéotexte (VT), reçu et conditionné dans une voie (17) séparée de la voie (6, 7, 5) du signal de lumance (Y), est enregistré sans modulation sur une porteuse à la place de la porteuse-image (B).

2. Magnétoscope selon la revendication 1, caractérisé en ce que l'enregistrement est effectué, pendant les lignes de vidéotexte (n° 17, 18, 330, 331) à chaque fois seulement pendant le temps de parcours de ligne.

3. Magnétoscope selon la revendication 1, caractérisé en ce que, pendant l'enregistrement du signal de vidéotexte (VT), le modulateur-FM (7) du signal de lumance (Y) est arrêté.

4. Magnétoscope selon la revendication 1, caractérisé en ce que, lors de la reproduction, il est prévu dans la voie du signal de vidéotexte (VT) un circuit de compensation d'erreurs temporelle.

Fig. 1

Fig. 2